(19) Europäisches Patentamt
European Patent Office
Office européen des brevets

(11) **EP 2 674 443 A1**

(12) **EUROPEAN PATENT APPLICATION**
published in accordance with Art. 153(4) EPC

(43) Date of publication:
**18.12.2013 Bulletin 2013/51**

(21) Application number: **12744180.6**

(22) Date of filing: **09.02.2012**

(51) Int Cl.:
**C08G 18/65** (2006.01)     **C08G 18/80** (2006.01)
**C09D 5/02** (2006.01)     **C09D 175/04** (2006.01)

(86) International application number:
**PCT/JP2012/052941**

(87) International publication number:
**WO 2012/108492 (16.08.2012 Gazette 2012/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2011 JP 2011027926**

(71) Applicant: **UBE INDUSTRIES, LTD.**
**Ube-shi**
**Yamaguchi 755-8633 (JP)**

(72) Inventors:
• **MORIKAMI, Atsushi**
  **Yamaguchi 755-8633 (JP)**

• **NAIKI, Masahiro**
  **Yamaguchi 755-8633 (JP)**
• **ADACHI, Fumio**
  **Yamaguchi 755-8633 (JP)**
• **TAKAHASHI, Manabu**
  **Yamaguchi 755-8633 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **WATERBORNE POLYURETHANE RESIN DISPERSION AND USE THEREOF**

(57)     An aqueous polyurethane resin dispersion is a dispersion of a polyurethane resin in an aqueous medium, the polyurethane resin being obtained by reacting (A) a polyurethane prepolymer obtained by reacting (a) a polyisocyanate compound, (b) a polyol compound including a polycarbonate polyol with a number average molecular weight of 400 to 3000, (c) an acidic group-containing polyol compound and (d) a blocking agent, with (B) a chain extender, the total content of urethane bonds and urea bonds being 7 to 15 wt%, the content of carbonate bonds being 15 to 40 wt%, the content of ether bonds being 0.5 to 5 wt%, the content of isocyanate groups bonded to the blocking agent being 0.2 to 2.0 wt%, each of these contents being based on solid contents, the acid value being 10 to 16 mg KOH/g. The aqueous polyurethane resin dispersion can form coating films which permit new application while exhibiting excellent water resistance and solvent resistance. A coating composition includes the dispersion. A polyurethane resin film is obtained by thermally drying a composition including the dispersion.

**Description**

TECHNICAL FIELD

The present invention relates to aqueous polyurethane resin dispersions in which a polyurethane resin is dispersed in an aqueous medium. Further, the invention relates to coating compositions containing the aqueous polyurethane resin dispersion, and to polyurethane resin films obtained by thermally drying a composition including the polyurethane resin dispersion.

BACKGROUND ART

Aqueous polyurethane resin dispersions can give coating films exhibiting adhesion, wear resistance and rubber properties, and are environment-responsive materials containing smaller amounts of volatile organic compounds than found in conventional solvent-based polyurethanes. Thus, these materials are replacing solvent-based polyurethanes. Polycarbonate polyols are useful as materials for polyurethane resins. The reaction of these compounds with isocyanate compounds affords polyurethane resins with durability which are used in applications such as rigid foams, flexible foams, coatings, adhesives, synthetic leathers and ink binders. Literature describes that characteristics of polyurethane resins from polycarbonate polyols are exhibited due to the strong cohesive force of carbonate groups and the resins are excellent in water resistance, heat resistance, oil resistance, elastic recovery, wear resistance and weather resistance (see Non Patent Literature 1). Further, it is known that coating films which are obtained by applying aqueous urethane resin dispersions prepared using polycarbonate polyols as materials exhibit excellent light resistance, heat resistance, hydrolysis resistance and oil resistance (see Patent Literature 1).

Although aqueous polyurethane resin dispersions involving the use of polycarbonate polyols exhibit good properties as described above, the properties are not sufficiently satisfactory compared to those achieved by solvent-based polyurethanes. In particular, the resistances of coating films to solvents and water are insufficient. A conventional remedy to improve these properties is to introduce a crosslink structure into the polyurethane resins or to blend the resins with crosslinking agents such as epoxy resins and polyfunctional isocyanates and crosslink the resultant compositions during curing. In particular, aqueous polyurethane resin dispersions having blocked  isocyanate groups are stable at room temperature and are highly useful as one-component crosslinkable dispersions having high storage stability (Patent Literature 2 and Patent Literature 3). Aqueous polyurethane resin dispersions prepared using polycarbonate polyols as materials are also known to have high adhesion with respect to electrodeposited coating films (Patent Literature 4).

Furthermore, the present inventors have found that aqueous polyurethane resin dispersions having urethane bonds, urea bonds and carbonate bonds as well as a specific amount of blocked isocyanate groups allow for the control of film production rate after application and give coating films which can be redispersed in water, as well as have found that coating films obtained by applying and thermally drying the dispersions are excellent in water resistance and solvent resistance, excellent in adhesion with respect to electrodeposited coating films, and excellent in impact resistance due to high tensile energy at break (Patent Literature 5).

CITATION LIST

Patent Literature

Patent Literature 1: Japanese Patent Application Kokai Publication No. H10-120757
Patent Literature 2: Japanese Patent Application Kokai Publication No. 2002-128851
Patent Literature 3: Japanese Patent Application Kokai Publication No. 2000-104015
Patent Literature 4: Japanese Patent Application Kokai Publication No. 2005-220255
Patent Literature 5: WO 2010/098316

Non Patent Literature

Non Patent Literature 1: "The Comprehensive Materials and Technology for a Novel Polyurethane Production", published from CMC Publishing CO., LTD., Chapter 2, p. 43

DISCLOSURE OF THE INVENTION

Problem to be Solved by the Invention

When aqueous polyurethane resin dispersions are used for films, coatings and as coating materials, the dispersions are applied to substrates, etc. with application apparatuses such as bar coaters, roll coaters and air sprays. Conventional aqueous  polyurethane resin dispersions capable of forming coating films highly resistant to solvents and water are unsatisfactory in that after the dispersions are applied to substrates, the wet coating layers or the coating films are resistant to removal by washing or stripping, thus making new application difficult. In particular, the removal of coating films that are formed from aqueous polyurethane resin dispersions exhibiting high adhesion with respect to substrates requires that the coating films be dissolved or redispersed in media such as organic solvents. However, the use of organic solvents and large amounts of surfactants incurs complicated treatments of waste liquids and causes problems such as that the substrates are dissolved and that other films disposed on the substrates are separated.
On the other hand, for use for protective films for electrodeposited coating films on steel sheets of products such as building materials, electrical equipment, vehicles, industrial equipment and office equipment, there has been a demand for aqueous polyurethane resin dispersions which can form coating films exhibiting high impact resistance and high adhesion with respect to electrodeposited coating films and which permit new application as well as easy removal of wet coating layers and coating films applied to undesired portions.

Means for Solving the Problem

The present invention has been made in order to solve the aforementioned problems, and specifically has the following constitutions.
The invention relates to an aqueous polyurethane resin dispersion in which a polyurethane resin is dispersed in an aqueous medium, the polyurethane resin being obtained by reacting (A) a polyurethane prepolymer obtained by reacting (a) a polyisocyanate compound, (b) a polyol compound including a polycarbonate polyol with a number average molecular weight of 400 to 3000, (c) an acidic group-containing polyol compound and (d) an isocyanate group-blocking agent, with (B) a chain extender having reactivity with the isocyanate groups of the polyurethane prepolymer, the total of the content of urethane bonds and the content of urea bonds being 7 to 15 wt%, the content of carbonate bonds being 15 to 40 wt%, the content of ether bonds being 0.5 to 5 wt%, the content of isocyanate groups bonded to the blocking agent being 0.2 to 2.0 wt% in terms of isocyanate groups, each of these contents being based on solid contents, the acid value being 10 to 16 mg KOH/g.
In the aqueous polyurethane resin dispersion, it is preferred that (b) the polyol compound includes a polyether polyol.
In the aqueous polyurethane resin dispersion, it is preferred that the proportion of the polyether polyol be 5 to 30 wt% in 100 wt% of (b) the polyol compound.
In any of the aqueous polyurethane resin dispersions described above, it is preferred that the weight average molecular weight be 25,000 to 60,000.
In any of the aqueous polyurethane resin dispersions described above, it is preferred that the content of an alicyclic structure be 10 to 40 wt% based on solid content.
In any of the aqueous polyurethane resin dispersions described above, (a) the polyisocyanate compound is preferably an alicyclic diisocyanate.
In any of the aqueous polyurethane resin dispersions described above, it is preferred that (a) the polyisocyanate compound is 4,4'-dicyclohexylmethane diisocyanate and/or isophorone diisocyanate.
In any of the aqueous polyurethane resin dispersions described above, (d) the blocking agent is preferably one or more selected from the group consisting of an oxime compound, a pyrazole compound and a malonate diester compound.
Further, the invention relates to a coating composition including any of the aqueous polyurethane resin dispersions described above.
Furthermore, the invention relates to a polyurethane resin film obtained by thermally drying a composition including any of the aqueous polyurethane resin dispersions described above.

Advantageous Effects of the Invention

Coating films formed with the inventive aqueous polyurethane resin dispersions are suppressed from being swollen with water and on the other hand exhibit a high rate of swelling with respect to aqueous cleaning liquids (for example, aqueous solutions including an alcohol, an amine, an aminoalcohol and a cellosolve). That is, the aqueous polyurethane resin dispersions provided by the present invention can form coating films which permit new application while exhibiting excellent water resistance and solvent resistance. Further, coating films obtained with the inventive aqueous polyurethane resin dispersions or the inventive coating compositions exhibit excellent adhesion with respect to electrodeposited coating films and show excellent impact resistance because of their high tensile energy at break, thus achieving high utility. Furthermore, the inventive polyurethane resin films can be used as decorative films. Best Mode for Carrying Out the Invention

[(a) Polyisocyanate compound]

(a) The polyisocyanate compound in the invention is not particularly limited. Diisocyanate compounds having two isocyanate groups per molecule are preferred.

Specific examples include aromatic polyisocyanate compounds such as 1,3-phenylene diisocyanate, 1,4-phenylene diisocyanate, 2,4-tolylene diisocyanate (TDI), 2,6-tolylene diisocyanate, 4,4'-diphenylenemethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, m-isocyanatophenylsulfonyl isocyanate and p-isocyanatophenylsulfonyl isocyanate; aliphatic polyisocyanate compounds such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate and 2-isocyanatoethyl-2,6-diisocyanatohexanoate; and alicyclic polyisocyanate compounds such as isophorone diisocyanate (IPDI), 4,4'-dicyclohexylmethane diisocyanate (hydrogenated MDI)), cyclohexylene diisocyanate, methylcyclohexylene diisocyanate (hydrogenated TDI), bis(2-isocyanatoethyl)-4-dyclohexene-1,2-dicarboxylate, 2,5-norbornane diisocyanate and 2,6-norbornane diisocyananate. These polyisocyanate compounds may be used alone, or a plurality thereof may be used in combination.

Of (a) the polyisocyanate compounds, the alicyclic polyisocyanate compounds are preferred. The use of the alicyclic polyisocyanate compounds results in coating films which are resistant to yellowing and which tend to exhibit higher hardness. Of the alicyclic polyisocyanate compounds, alicyclic diisocyanate compounds are preferred.

From the viewpoint of controlling the reactivity and in view of the fact that the coating films obtained exhibit high elastic modulus, isophorone diisocyanate (IPDI) and/or 4,4'-dicyclohexylmethane diisocyanate (hydrogenated MDI) are more preferable. The water resistance of coating films may be increased by increasing the proportion of the hydrogenated MDI. The rate of swelling of dry coating films with respect to aqueous cleaning liquids may be increased by increasing the proportion of the IPDI.

[(b) Polyol compound]

(b) The polyol compound in the invention includes polycarbonate polyols with a number average molecular weight of 400 to 3000.

[(b-1) Polycarbonate polyol with number average molecular weight of 400 to 3000]

The polycarbonate polyols with a number average molecular weight of 400 to 3000 in the invention are not particularly limited as long as the number average molecular weight is 400 to 3000. If the number average molecular weight of the polycarbonate polyols is less than 400, problems such as low tensile energy at break of the coating films obtained are caused. If the number average molecular weight of the polycarbonate polyols exceeds 3000, problems such as poor water resistance of the polyurethane resin obtained are caused. From the viewpoints of tensile energy at break and water resistance, the number average molecular weight is more preferably 800 to 2500. Polycarbonate diols having two hydroxyl groups per molecule are preferred.

Any of polycarbonate polyols produced by common production methods such as ester exchange between polyols and carbonate esters, and phosgene method, may be used as the above polycarbonate polyols.

From the viewpoint of the tensile energy at break of the coating films obtained, the proportion of (b-1) the polycarbonate polyol with a number average molecular weight of 400 to 3000 in (b) the polyol compound is preferably 50 wt% to 100 wt%, more preferably 70 wt% to 100 wt%, and particularly preferably 85 wt% to 100 wt%. In the invention, the number average molecular weight (Mn) of the polycarbonate polyols may be determined from the hydroxyl value according to the following equation.

$$Mn = (56100 \times valence)/hydroxyl\ value$$

In the equation, the valence is the number of hydroxyl groups in the molecule, and the hydroxyl value is a value measured in accordance with the method B specified in JIS K 1557. The valence is 2 when the polycarbonate polyol is a polycarbonate diol.

Examples of the polyols as materials for the polycarbonate polyols include aliphatic diols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol and 1,12-dodecanediol, as well as 1,3-butanediol, 3-methylpentane-1,5-diol, 2-ethylhexane-1,6-diol, 2-methyl-1,3-pentanediol, neopentyl glycol and 2-methyl-1,8-octanediol; alicyclic diols such as 1,3-cyclohexanediol, 1,4-cyclohexanediol, 2,2'-bis(4-hydroxycyclohexyl)propane and 1,4-cyclohexanedimethanol; aromatic diols such as 1,4-benzenedimethanol; ether group-containing diols such as diethylene glycol, triethylene glycol and bis(hydroxymethyl) dioxane; and polyfunctional polyols such as trimethylolpropane and pentaerythritol. A single polyol may be used to produce the polycarbonate polyol, or a plurality of polyols may be used to produce the polycarbonate polyols. Of the polycarbonate polyols, those polycarbonate polyols containing the aliphatic diols or the alicyclic diols are preferred. Those polycarbonate polyols containing the aliphatic diols are more preferable. Those polycarbonate polyols containing 1,6-hexanediol are particularly preferable.

[(b-2) Polyether polyol]

In the invention, (b) the polyol compound may includes (b-1) the polycarbonate polyol with a number average molecular weight of 400 to 3000 as well as (b-2) a polyether polyol. By the use of (b-2) the polyether polyol, the content of ether bonds in the polyurethane resin may be controlled to be in an appropriate range and the rate of swelling of coating films with respect to aqueous cleaning liquids may be increased.

(b-2) The polyether polyol is preferably used at 5 to 30 wt%, and more preferably 5 to 20 wt% in 100 wt% of (b) the polyol compound.

From the viewpoints of the rates of swelling of coating films with respect to water and aqueous cleaning liquids, as well as the tensile break energy of coating films, polyether polyols having a number average molecular weight of 400 to 3000 are preferred, and those having a number average molecular weight of 500 to 2000 are more preferable.

Examples of the polyether polyols include polyalkylene ether polyols represented by the formula:

$$H\text{-}(O\text{-}A)_n\text{-}OH$$

(wherein A is an alkylene group having 2 to 6 carbon atoms, and preferably 2 to 4 carbon atoms, and the letter n indicates the average polymerization degree and is preferably 5 to 70, and more preferably 6 to 45). Specific examples include polyethylene glycol, polypropylene glycol, poly(1,3-trimethylene glycol), polytetramethylene glycol, poly(1,2-tetramethylene glycol), poly(1,3-tetramethylene glycol), poly(1,2-cyclohexane oxide), and copolymers including two or more of these polyols (such as polyoxyethylene-polyoxypropylene (block and/or random) glycols). Examples of the polyether polyols further include adducts of low-molecular weight polyols with alkylene oxides such as adducts of bisphenols-A with ethylene oxide. Examples of the low-molecular weight polyols include the polyols mentioned above as the materials for the polycarbonate polyols.

[(b-3) Additional polyol compound]

In the invention, (b) the polyol compound may include (b-3) a polyol compound in addition to (b-1) the polycarbonate polyol with a number average molecular weight of 400 to 3000 and (b-2) the polyether polyol.

(b-3) The additional polyol compound is preferably used at not more than 45 wt%, and more preferably 0 to 15 wt% in 100 wt% of (b) the polyol compound.

The additional polyol compound is not particularly limited. Examples include polyester polyols, polycarbonate polyols except those having a number average molecular weight of 400 to 3000, aliphatic diols, alicyclic diols, aromatic diols and polyfunctional polyols. To increase the tensile energy at break and the water resistance of coating films, aliphatic diols, alicyclic diols, and polycarbonate polyols except those having a number average molecular weight of 400 to 3000 may be used. Here, (b-3) the additional polyol compound excludes (c) an acidic group-containing polyol compound described next.

[(c) Acidic group-containing polyol compound]

(c) The acidic group-containing polyol compound in the invention is not particularly limited as long as the compounds contain two or more hydroxyl groups and one or more acidic groups in the molecule. Examples of the acidic groups include carboxyl groups, sulfonic groups, phosphoric groups and phenolic hydroxyl groups. Specific examples include 2,2-dimethylolalkanoic acids such as 2,2-dimethylolpropionic acid and 2,2-dimethylolbutanoic acid, as well as N,N-bishydroxyethylglycine, N,N-bishydroxyethylalanine, 3,4-dihydroxybutanesulfonic acid and 3,6-dihydroxy-2-toluenesulfonic acid. These may be used alone, or a plurality thereof may be used in combination. Of the acidic group-containing polyol compounds, 2,2-dimethylolpropionic acid is preferred from the viewpoint of availability.

[(d) Blocking agent]

The isocyanate group-blocking agent in the invention is not particularly limited, and an appropriate agent that is dissociated from the isocyanate groups at 80 to 180°C may be used. Examples of the blocking agents which are dissociated from the isocyanate groups at 80 to 180°C include malonate diester compounds such as dimethyl malonate and diethyl malonate; pyrazole compounds such as 1,2-pyrazole and 3,5-dimethylpyrazole; 1,2,4-triazole; oxime compounds such as methyl ethyl ketoxime; diisopropylamine, and caprolactam. These may be used alone, or a plurality thereof may be used in combination.

Of the blocking agents, one or more selected from oxime compounds, pyrazole compounds and malonate diester compounds are preferred from the viewpoint of dissociation temperature. From the viewpoints of storage stability and impact resistance, 3,5-dimethylpyrazole is particularly preferable.

[(A) Polyurethane prepolymer]

(A) The polyurethane prepolymer in the invention is a polyurethane prepolymer obtained by reacting (a) the polyisocyanate compound, (b) the polyol compound, (c) the acidic group-containing polyol compound and (d) the blocking agent.

The polyurethane prepolymers may be produced by any methods without limitation. Exemplary methods include the following methods.

In a first method, (a) the polyisocyanate compound, (b) the polyol compound and (c) the acidic group-containing polyol compound are reacted together in the presence or absence of a urethane reaction catalyst to produce a urethane, and the urethane is reacted with (d) the blocking agent in the presence or absence of a blocking reaction catalyst to synthesize (A) a polyurethane prepolymer in which part of the terminal isocyanate groups are blocked.

In a second method, (a) the polyisocyanate compound is reacted with (d) the blocking agent in the presence or absence of a blocking reaction catalyst to synthesize a partially blocked polyisocyanate compound, and this compound is reacted with (b) the polyol compound and (c) the acidic group-containing polyol compound in the presence or absence of a urethane reaction catalyst to synthesize (A) a polyurethane prepolymer.

The urethane reaction catalyst is not particularly limited. Examples include salts of metals and organic or inorganic acids such as tin catalysts (such as trimethyltin laurate and dibutyltin dilaurate) and lead catalysts (such as lead octonoate), as well as organometallic derivatives, amine catalysts (such as triethylamine, N-ethylmorpholine and triethylenediamine) and diazabicycloundecene catalysts. In particular, dibutyltin dilaurate is preferred from the viewpoint of reactivity.

The blocking reaction catalyst is not particularly limited. Examples include dibutyltin dilaurate and alkali catalysts such as sodium methoxide.

The amounts of (a), (b), (c) and (d) are not particularly limited as long as, in the aqueous polyurethane resin dispersion obtained, the total of the content of urethane bonds and the content of urea bonds is 7 to 15 wt%, the content of carbonate bonds is 15 to 40 wt%, the content of ether bonds is 0.5 to 5 wt%, and the content of isocyanate groups bonded to the blocking agent is 0.2 to 2 wt% in terms of isocyanate groups, all based on solid contents. The components are preferably used in the following amounts. The amount of (b) is preferably 0.1 to 0.5 times, more preferably 0.15 to 0.45 times, and particularly preferably 0.2 to 0.4 times by mole the amount of (a). The amount of (c) is preferably 0.3 to 2.0 times, more preferably 0.4 to 1.6 times, and particularly preferably 0.5 to 1.3 times by mole the amount of (b). The amount of (d) is preferably 0.03 to 0.25 times, more preferably 0.04 to 0.20 times, and particularly preferably 0.06 to 0.16 times by mole the amount of (a).

[(B) Chain extender]

(B) The chain extender of the invention is not particularly limited. Examples include polyamine compounds such as hydrazine, ethylenediamine, 1,4-tetramethylenediamine, 2-methyl-1,5-pentanediamine, 1,6-hexamethylenediamine, 1,4-hexamethylenediamine, 3-aminomethyl-3,5,5-trimethylcyclohexylamine, 1,3-bis(aminomethyl)cyclohexane, xylylenediamine, piperazine, 2,5-dimethylpiperazine, diethylenetriamine and triethylenetetramine; polyol compounds such as ethylene glycol, propylene glycol, 1,4-butanediol and 1,6-hexanediol; polyalkylene glycols such as polyethylene glycol; and water. In particular, primary diamine compounds are preferred. These may be used alone, or a plurality thereof may be used in combination.

The amount of (B) the chain extender added is preferably not more than the equivalent of the unblocked isocyanate groups which serve as the starting points of chain extension in the urethane prepolymer (A), and is more preferably 0.7 to 0.99 equivalent of the unblocked isocyanate groups. If the chain extender is added in excess of the equivalent of the unblocked isocyanate groups, the molecular weight of the urethane polymer resulting from the chain extension may be decreased, often resulting in a decrease in the strength of coating films formed with the aqueous polyurethane resin dispersion obtained.

[Aqueous polyurethane resin dispersion]

The aqueous polyurethane resin dispersion of the invention may be produced by any methods without limitation, and may be produced by the following method as an example.

(a) The polyisocyanate compound, (b) the polyol compound, (c) the acidic group-containing polyol compound and (d) the blocking agent are reacted together as described above to produce a polyurethane prepolymer. After this step, the polyurethane prepolymer is subjected to a step of neutralizing the acidic groups and a step of dispersing the polyurethane prepolymer in an aqueous medium. Further, a step is performed in which the polyurethane prepolymer is reacted with (B) the chain extender to give an aqueous polyurethane resin dispersion.

In the above production method, the addition of the chain extender may take place after or while the polyurethane prepolymer is dispersed in an aqueous medium.

The above steps may be carried out in an inert gas atmosphere or in air.

In the aqueous polyurethane resin dispersion of the invention, the total of urethane bonds and urea bonds present in the aqueous polyurethane resin dispersion should be 7 to 15 wt%, and is particularly preferably 9 to 13 wt% based on solid content.

An extremely low content of urethane bonds and urea bonds combined leads to problems such as a failure to form coating films and the development of stickiness on the surface of dry coating films. If the total content of urethane bonds and urea bonds is excessively high, dry coating films obtained by the application of the aqueous polyurethane resin dispersion onto substrates exhibit a decreased rate of swelling with respect to aqueous cleaning liquids and become resistant to removal, making it impossible to permit new application.

From the viewpoints of the tensile break energy of the coating films obtained as well as the rate of swelling with aqueous cleaning liquids, the content of urethane bonds is preferably 5 to 11 wt%, and more preferably 6 to 10 wt%. From the viewpoints of the rate of swelling of coating films with water and drying properties of coating films, the content of urea bonds is preferably 1.5 to 6 wt%, and more preferably 2 to 5 wt%.

In the aqueous polyurethane resin dispersion of the invention, the content of carbonate bonds present in the aqueous polyurethane resin dispersion should be 15 to 40 wt%, and is more preferably 18 to 35 wt%, and particularly preferably 20 to 30 wt% based on solid content.

An extremely low content of carbonate bonds leads to a problem in that the coating films obtained have low break elongation and are vulnerable to impact. An excessively high content of carbonate bonds leads to problems such as a failure to form coating films and the development of stickiness on the surface of dry coating films.

In the aqueous polyurethane resin dispersion of the invention, the content of ether bonds present in the aqueous polyurethane resin dispersion should be 0.5 to 5 wt% based on solid content. An excessively high content of ether bonds tends to lead to a decrease in the elastic modulus of coating films and an increase in the rate of swelling of the coating films obtained with respect to water. On the other hand, an extremely low content of ether bonds results in a low rate of swelling of dry coating films with respect to aqueous cleaning liquids, thus making new application of coatings and coating agents infeasible. The content of ether bonds is more preferably 1 to 3 wt%.

The content of ether bonds may be controlled by regulating the amounts of materials having ether bonds, in detail, by regulating the amounts of the polyether polyols (b-2) among (b) the polyol compound, the amounts of polycarbonate polyols having ether bonds, the amounts of polyester polyols having ether bonds, and the amounts of low-molecular weight polyols having ether bonds. The polycarbonate polyols and polyester polyols having ether bonds are obtained by, for example, using ether group-containing diols as materials.

In the aqueous polyurethane resin dispersion of the invention, the content of isocyanate groups blocked by the blocking agent should be 0.2 to 2.0 wt%, and is particularly preferably 0.5 to 1.5 wt% based on solid content and in terms of isocyanate groups.

If the content of blocked isocyanate groups is excessively low, the coating films obtained exhibit problematic poor adhesion with respect to the surface of electrodeposition coated sheets. An extremely high content of blocked isocyanate groups leads to a problem in that the coating films obtained have low break elongation and are vulnerable to impact.

Provided that the number of moles (X) indicates the number of moles of the isocyanate groups that remain after the deduction of the number of moles of the hydroxyl groups present in (b) the polyol compound and the number of moles of the hydroxyl groups present in (c) the acidic group-containing polyol compound from the number of moles of the isocyanate groups present in (a) the polyisocyanate compound as well as provided that (d) the blocking agent is used in a smaller number of moles than (X), the content of isocyanate groups blocked by the blocking agent may be controlled by changing the proportion of (d) the blocking agent used in the aqueous polyurethane resin dispersion based on solid content. When the amount of (d) the blocking agent used is larger than (X), the content of isocyanate groups blocked by the blocking agent may be determined from the value of (X) in the aqueous polyurethane resin dispersion based on solid content.

In the aqueous polyurethane resin dispersion, the weight average molecular weight of the polyurethane resin should be 25,000 to 60,000, and is more preferably 28,000 to 50,000, and particularly preferably 30,000 to 45,000. If the weight average molecular weight of the polyurethane resin is less than 25,000, the aqueous polyurethane resin dispersion gives coating films which exhibit low tensile strength and are often vulnerable to impact. If the weight average molecular weight of the polyurethane resin in the aqueous polyurethane resin dispersion exceeds 60,000, dry coating films obtained by the application of the aqueous polyurethane resin dispersion onto substrates exhibit a decreased rate of swelling with respect to aqueous cleaning liquids and become resistant to removal, possibly making it difficult to permit new application.

In the invention, the weight average molecular weight is measured by gel permeation chromatography (GPC) with reference to a calibration curve that is preliminarily prepared with respect to standard polystyrenes.

The acid value of the aqueous polyurethane resin dispersion should be 10 to 16 mg KOH/g, and is more preferably 12 to 16 mg KOH/g, and particularly preferably 14 to 16 mg KOH/g. If the acid value of the aqueous polyurethane resin dispersion exceeds 16 mg KOH/g, the rate of swelling of coating films with water is increased. Any acid value of less than 10 mg KOH/g tends to result in a decrease in dispersibility in aqueous media. The acid value may be measured in accordance with an indicator titration method specified in JIS K 1557. The measurement is performed after the removal of the neutralizer used to neutralize the acidic groups. For example, when an organic amine is used as the neutralizer, the aqueous polyurethane resin dispersion may be applied onto a glass plate and dried at a temperature of 60°C and a reduced pressure of 20 mmHg for 24 hours, and the resultant coating film may be dissolved in N-methylpyrrolidone (NMP) and analyzed in accordance with an indicator titration method specified in JIS K 1557 to determine the acid value.

The polyurethane resin in the aqueous polyurethane resin dispersion preferably includes an alicyclic structure. In such a case, the content of the alicyclic structure in the aqueous polyurethane resin dispersion is not particularly limited, but is preferably 10 to 40 wt%, more preferably 12 to 30 wt%, and particularly preferably 14 to 25 wt% based on solid content. If the content of the alicyclic structure in the aqueous polyurethane resin dispersion is excessively low, the coating films obtained may exhibit a low elastic modulus and a decreased hardness. If the content of the alicyclic structure in the aqueous polyurethane resin dispersion is excessively high, dry coating films obtained by the application of the aqueous polyurethane resin dispersion onto substrates exhibit a decreased rate of swelling with respect to aqueous cleaning liquids and become resistant to removal, possibly making it difficult to permit new application.

[Neutralizers]

In the aqueous polyurethane resin dispersion of the invention, the resin is preferably dispersed in an aqueous medium after the acidic groups in the prepolymer are neutralized with a neutralizer.

Examples of the neutralizers include organic amines such as trimethylamine, triethylamine, tri-n-propylamine, tributylamine, triethanolamine, aminomethyl propanol, aminomethyl propanediol, aminoethyl propanediol, trihydroxymethyl aminomethane, monoethanolamine and triisopropanolamine; inorganic alkali salts such as potassium hydroxide and sodium hydroxide; and ammonia. These may be used alone, or a plurality thereof may be used in combination.

Of the neutralizers, the organic amines are preferred, and triethylamine is more preferable from the viewpoint of workability.

The amount of the neutralizers added is, for example, 0.4 to 1.2 equivalents, and preferably 0.6 to 1.0 equivalent with respect to 1 equivalent of the acidic groups.

[Aqueous media]

In the invention, the polyurethane resin is dispersed in an aqueous medium. Examples of the aqueous media include water and mixtures of media containing water and hydrophilic organic solvents.

Examples of the water include tap water, ion exchange water, distilled water and ultrapure water. Ion exchange water is preferred in view of availability and the fact that particles become unstable under the influence of salts.

Examples of the hydrophilic organic solvents include lower monohydric alcohols such as methanol, ethanol and propanol; polyhydric alcohols such as ethylene glycol and glycerine; and aprotic hydrophilic organic solvents such as N-methylmorpholine, dimethyl sulfoxide, dimethylformamide, N-methylpyrrolidone and N-ethylpyrrolidone.

The amount of the hydrophilic organic solvents in the aqueous medium is preferably 0 to 20 wt%.

Coating films formed by the application of the inventive aqueous polyurethane resin dispersions exhibit excellent water resistance and solvent resistance as well as show excellent adhesion with respect to electrodeposited coating films. There are two types of electrodeposited coating films, namely, anionic and cationic. In general, the cationic type utilizes a modified epoxy resin as the base resin and is crosslinked with isocyanate, whilst the anionic type is crosslinked by oxidative polymerization. The cationic type contains residual secondary hydroxyl groups resulting from the ring opening of the epoxy groups. In the anionic type, carboxyl groups are introduced. Thus, it is probable that these functional groups undergo the crosslinking reaction with the free isocyanate groups which are formed by the dissociation of the blocking agent during the step in which the inventive aqueous polyurethane resin dispersion is thermally dried. Such electrodeposited coating films are utilized in industrial machines such as heavy machinery and agricultural machines, vehicles such as automobiles and bicycles, building materials such as prefab steel frames, fireproof doors and sashes, and electrical equipment such as switch boards, elevators and microwave ovens.

For example, the aqueous polyurethane resin dispersions of the invention may be applied onto the substrates having electrodeposited coating films with devices such as application apparatuses and may be baked at a temperature of 80 to 250°C. A drying step may be provided before the baking step. Alternatively, the aqueous polyurethane resin dispersion that has been applied may be dried, then other materials such as coatings may be applied and dried, and the films may be collectively baked.

Upon baking of the aqueous polyurethane resin dispersion that has been  applied, the blocked isocyanate groups are released from the blocking by the blocking agent and form crosslink structures with groups such as acidic groups and other isocyanate groups, resulting in coating films exhibiting stronger adhesion and higher hardness.

The baking step and the drying step may be performed by common methods.

[Coating compositions]

Coating compositions of the invention may be composed of the aqueous polyurethane resin dispersions alone or the aqueous polyurethane resin dispersions in combination with various additives.

Examples of the additives include plasticizers, antifoaming agents, leveling agents, fungicides, antirust agents, matting agents, flame retardants, tackifiers, thixotropic agents, lubricants, antistatic agents, viscosity decreasing agents, thickening agents, diluents, pigments, dyes, UV absorbers, light stabilizers, antioxidants and fillers.

The coating compositions of the invention may be coated onto various substrates such as metals, ceramics, synthetic resins, nonwoven fabrics, woven fabrics, knitted fabrics and papers.

[Polyurethane resin films]

Polyurethane resin films of the invention may be produced by thermally drying a composition including the aqueous polyurethane resin dispersion.

The composition including the aqueous polyurethane resin dispersion may be composed of the aqueous polyurethane resin dispersion alone or the aqueous polyurethane resin dispersion in combination with various additives.

Examples of the additives include plasticizers, antifoaming agents, leveling agents, fungicides, antirust agents, matting agents, flame retardants, tackifiers, thixotropic agents, lubricants, antistatic agents, viscosity decreasing agents, thickening agents, diluents, pigments, dyes, UV absorbers, light stabilizers, antioxidants and fillers.

The polyurethane resin films may be produced by any methods without limitation. In an exemplary method, the aqueous polyurethane resin dispersion is applied onto a releasable substrate with any of various application apparatuses, then the wet film is dried, and the releasable substrate and the polyurethane resin film are separated from each other.

The releasable substrates are not particularly limited. Examples include glass substrates, plastic substrates such as polyethylene terephthalate and polytetrafluoroethylene, and metal substrates. The surface of the substrates may be treated with a releasing agent.

The application apparatuses are not particularly limited. Examples include  bar coaters, roll coaters, gravure roll coaters and air sprays.

The thickness of the inventive polyurethane resin films is not particularly limited, but is preferably 0.01 to 0.5 mm.

EXAMPLES

Next, the present invention will be described in further detail by presenting examples and comparative examples. Properties were measured as follows.

(1) Hydroxyl value: The hydroxyl value was measured in accordance with the method B specified in JIS K 1557.
(2) Content of free isocyanate groups: After the urethane reaction, 0.5 g of the reaction mixture was sampled and was added to a mixed solution consisting of 10 mL of a 0.1 mol/L (liter) dibutylamine-tetrahydrofuran (THF) solution and 20 mL of THF. The amount of unconsumed dibutylamine was determined by titration against 0.1 mol/L hydrochloric acid. Based on the difference between the titration value and a blank experiment, the molar concentration of isocyanate groups that had remained in the reaction mixture was calculated. The molar concentration was converted into the weight fraction of isocyanate groups, thus determining the content of free isocyanate groups.

Bromophenol blue was used as the indicator in the titration.

(3) Content of urethane bonds based on solid content, and content of urea bonds based on solid content: The molar concentrations (mol/g) of urethane bonds and urea bonds were calculated from the proportions of materials used to produce the aqueous polyurethane resin dispersion. The calculated concentrations were indicated as weight fractions. The weight fractions were based on the solid content of the aqueous polyurethane resin dispersion. The aqueous polyurethane resin dispersion weighing 0.3 g was applied with a thickness of 0.2 mm onto a glass substrate, and the wet film was thermally dried at 140°C for 4 hours. The resultant weight was measured and was divided by the weight before drying to give the solid concentration. The weight fractions were calculated based on the solid weight that was the product of the total weight of the aqueous polyurethane resin dispersion multiplied by the solid concentration.

(4) Content of carbonate bonds based on solid content: The molar concentration (mol/g) of carbonate bonds was calculated from the proportions of materials used to produce the aqueous polyurethane resin dispersion. The calculated concentration was indicated as a weight fraction. The weight fraction was based on the solid content of the aqueous polyurethane resin dispersion, and was calculated by the same method as the content of urethane bonds based on solid content.

(5) Content of ether bonds based on solid content: The molar concentration (mol/g) of ether bonds was calculated from the proportions of materials used to produce the aqueous polyurethane resin dispersion. The calculated concentration was indicated as a weight fraction. The weight fraction was based on the solid content of the aqueous polyurethane resin dispersion, and was calculated by the same method as the content of urethane bonds based on solid content.

(6) Content of alicyclic structure based on solid content: The weight fraction of alicyclic structure calculated from the proportions of materials used to produce the aqueous polyurethane resin dispersion was indicated. The weight fraction was based on the solid content of the aqueous polyurethane resin dispersion, and was calculated by the same method as the content of urethane bonds based on solid content.

(7) Acid value: The molar concentration (mol/g) of carboxyl groups was calculated from the proportions of materials used to produce the aqueous polyurethane resin dispersion. The calculated concentration was indicated as the weight of potassium hydroxide required to neutralize 1 g of the sample (mg KOH/g). The weight of the sample was based on the solid content of the aqueous polyurethane resin dispersion, and was calculated by the same method as the content of urethane bonds based on solid content.

(8) Weight average molecular weight of polyurethane resin in aqueous polyurethane resin dispersion: The weight average molecular weight was measured by gel permeation chromatography (GPC) with reference to a calibration curve that had been preliminarily prepared with respect to standard polystyrenes.

(9) Content of isocyanate groups bonded to blocking agent in aqueous polyurethane resin dispersion based on solid content (in terms of isocyanate groups): The molar amount of the blocking agent used was converted to the weight of isocyanate groups, and the weight was divided by the solid weight of the aqueous polyurethane resin dispersion, the resultant ratio being indicated. The solid weight of the aqueous polyurethane resin dispersion was calculated by the same method as the content of urethane bonds based on solid content.

(10) Dispersion stability: Of the aqueous polyurethane resin dispersion produced, a 1 kg portion was stored at 25°C for 1 day and was thereafter passed through a 120 mesh filter fabric. The symbol "×" indicates that the filtration residue caused clogging, and the symbol "○" indicates that the whole of the dispersion was filtered.

(11) Rate of swelling and rate of dissolution of coating films with water (water resistance): Onto a glass plate, 0.3 mL of the aqueous polyurethane resin dispersion was applied with a thickness of 0.2 mm. The wet film was thermally dried at 40°C until the solid concentration of the coating film became 90%. The resultant coating film was immersed in ion exchange water at 27°C for 8 hours. The weight of the coating film was measured before and after the immersion. After the immersion, the coating film was further dried at 140°C for 4 hours, and the weight of the coating film was measured. The rate of swelling and the rate of dissolution of the coating film with respect to water were calculated according to the following equations. The solid concentration of the dry coating film was calculated by the same method as the content of urethane bonds based on solid content.

$$\text{(Swelling rate)} = [\text{(weight of coating film after immersed in water)} - \text{(weight of coating film before immersed in water)}]/\text{(weight of coating film before immersed in water)} \times 100$$

$$(\text{Dissolution rate}) = [(\text{weight of coating film after application}) \times (\text{solid}$$
$$\text{concentration}) - (\text{weight of coating film immersed in water and dried at}$$
$$140°C)]/[(\text{weight of coating film after application}) \times (\text{solid concentration})] \times 100$$

(12) Rate of swelling and rate of dissolution of dry coating films with aqueous cleaning liquid: An aqueous cleaning liquid was prepared which contained 5%, 4%, 1 % and 90% by weight of butyl cellosolve, isopropanol, dimethylethanolamine and ion exchange water, respectively. Onto a glass plate, 0.3 mL of the aqueous polyurethane resin dispersion was applied with a thickness of 0.2 mm. The wet film was thermally dried at 40°C until the solid concentration of the coating film became 90%. The resultant coating film was immersed in the aqueous cleaning liquid at 27°C for 3 minutes. The weight of the coating film was measured before and after the immersion. After the immersion, the coating film was further dried at 140°C for 4 hours, and the weight of the coating film was measured. The rate of swelling and the rate of dissolution of the coating film with respect to the aqueous cleaning liquid were calculated according to the following equations. The solid concentration of the dry coating film was calculated by the same method as the content of urethane bonds based on solid content.

$$(\text{Swelling rate}) = [(\text{weight of coating film after immersed in aqueous cleaning}$$
$$\text{liquid}) - (\text{weight of coating film before immersed in aqueous cleaning liquid})]/(\text{weight}$$
$$\text{of coating film before immersed in aqueous cleaning liquid}) \times 100$$

$$(\text{Dissolution rate}) = [(\text{weight of coating film after application}) \times (\text{solid}$$
$$\text{concentration}) - (\text{weight of coating film immersed in aqueous cleaning liquid and dried}$$
$$\text{at } 140°C)]/[(\text{weight of coating film after application}) \times (\text{solid concentration})] \times 100$$

The symbol "*" indicates that the coating film that had been immersed in the aqueous cleaning liquid separated from the glass plate, and the film scattered into pieces in the aqueous cleaning liquid.

(13) Elastic modulus, tensile strength and break elongation of polyurethane resin films: These properties were measured by methods in accordance with JIS K 7311. The measurement conditions were measurement temperature 23°C, humidity 50% and stress rate 100 mm/min.

(14) Breaking energy: With respect to an elongation-stress curve, the stress was integrated from at zero elongation to the break elongation.

(15) Adhesion with surface of electrodeposited layer: The aqueous polyurethane resin dispersion was applied with a thickness of 0.2 mm onto a cationically electrodeposition coated automobile steel sheet (manufactured by Nippon Testpanel Co., Ltd.) and was thermally dried at 120°C for 3 hours and at 140°C for 30 minutes. The obtained coating film was subjected to a crosscut peel-off test. A lattice pattern was cut in a 5 mm x 5 mm area of the coating film with intervals of 1 mm, and a pressure sensitive adhesive tape was attached thereto. The tape was peeled, and the number of squares remaining on the surface of the electrodeposited layer was visually counted to evaluate the adhesion. The results were indicated as 15/25 when 15 squares out of the 25 squares had remained.

[Example 1]

[Production of aqueous polyurethane resin dispersion (1)]

A reaction vessel fitted with a stirrer, a reflux condenser tube and a thermometer was charged, under a stream of nitrogen, with 178 g of ETERNACOLL UH-200 (registered trademark; polycarbonate diol manufactured by UBE INDUSTRIES, LTD.; number average molecular weight 1961; hydroxyl value 57.2 mg KOH/g; polycarbonate diol obtained by reacting 1,6-hexanediol and dimethyl carbonate), 51.6 g of ETERNACOLL UH-100 (registered trademark; polycarbonate diol manufactured by UBE INDUSTRIES, LTD.; number average molecular weight 1004; hydroxyl value 111.8 mg KOH/g; polycarbonate diol obtained by reacting 1,6-hexanediol and dimethyl carbonate), 25.3 g of polypropylene glycol (PPG-1000; number average molecular weight 1000), 15.6 g of 2,2-dimethylolpropionic acid (DMPA) and 130 g of N-methylpyrrolidone (NMP). Thereafter, the materials were stirred while performing heating at 60°C, and the dissolution of DMPA was confirmed. Subsequently, 128 g of 4,4'-dicyclohexylmethane diisocyanate (hydrogenated MDI) and 0.33 g of dibutyltin dilaurylate (a catalyst) were added. The mixture was heated to 90°C, and a urethane reaction was carried out for 5 hours. Thereafter, 10.7 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 1.18 wt%. The reaction mixture was cooled to 80°C, and 11.6 g of triethylamine was admixed therewith. From the mixture, a 516 g portion was withdrawn and was added to 730 g of water while performing vigorous stirring. A chain extension reaction was carried out by adding 16.1 g of a 35 wt% aqueous hydrazine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (1). Table 2 describes the results of the dispersion stability, the rate of swelling of coating films with water, and the adhesion with the electrodeposited surface tested with respect to the aqueous polyurethane resin dispersion (1).

[Production of polyurethane film (A)]

The aqueous polyurethane resin dispersion (1) as a coating composition was applied onto a glass plate and was dried at 60°C for 2 hours and at 120°C for 2 hours, thus producing a satisfactory coating layer. The obtained coating layer was separated. A polyurethane film (A) was thus obtained. The film thickness of the polyurethane film (A) was 0.08 mm. Tensile properties are described in Table 2.

[Example 2]

[Production of aqueous polyurethane resin dispersion (2)]

A reaction vessel similar to that used in Example 1 was charged, under a stream of nitrogen, with 180 g of ETERNACOLL UH-200 (registered trademark; polycarbonate diol manufactured by UBE INDUSTRIES, LTD.; number average molecular weight 1961; hydroxyl value 57.2 mg KOH/g; polycarbonate diol obtained by reacting 1,6-hexanediol and dimethyl carbonate), 52.9 g of ETERNACOLL UH-100 (registered trademark; polycarbonate diol manufactured by UBE INDUSTRIES, LTD.; number average molecular weight 1004; hydroxyl value 111.8 mg KOH/g; polycarbonate diol obtained by reacting 1,6-hexanediol and dimethyl carbonate), 26.3 g of polypropylene glycol (PPG-1000; number average molecular weight 1000), 13.3 g of 2,2-dimethylolpropionic acid (DMPA) and 129 g of N-methylpyrrolidone (NMP). Thereafter, the materials were stirred while performing heating at 60°C, and the dissolution of DMPA was confirmed. Subsequently, 123 g of 4,4'-dicyclohexylmethane diisocyanate (hydrogenated MDI) and 0.33 g of dibutyltin dilaurylate (a catalyst) were added. The mixture was heated to 90°C, and a urethane reaction was carried out for 5 hours. Thereafter, 10.2 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 1.13 wt%. The reaction mixture was cooled to 80°C, and 10.0 g of triethylamine was admixed therewith. From the mixture, a 502 g portion was withdrawn and was added to 700 g of water while performing vigorous stirring. A chain extension reaction was carried out by adding 15.2 g of a 35 wt% aqueous hydrazine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (2). Table 2 describes the results of the dispersion stability, the rate of swelling of coating films with water, and the adhesion with the electrodeposited surface tested with respect to the aqueous polyurethane resin dispersion (2).

[Production of polyurethane film (B)]

The aqueous polyurethane resin dispersion (2) as a coating composition was applied onto a glass plate and was dried at 60°C for 2 hours and at 120°C for 2 hours, thus producing a satisfactory coating layer. The obtained coating layer was separated. A polyurethane film (B) was thus obtained. The film thickness of the polyurethane film (B) was 0.08 mm. Tensile properties are described in Table 2.

[Example 3]

[Production of aqueous polyurethane resin dispersion (3)]

A reaction vessel similar to that used in Example 1 was charged, under a stream of nitrogen, with 190 g of ETERNACOLL UH-200 (registered trademark; polycarbonate diol manufactured by UBE INDUSTRIES, LTD.; number average molecular weight 1982; hydroxyl value 56.6 mg KOH/g; polycarbonate diol obtained by reacting 1,6-hexanediol and dimethyl carbonate), 54.6 g of ETERNACOLL UH-100 (registered trademark; polycarbonate diol manufactured by UBE INDUSTRIES, LTD.; number average molecular weight 1004; hydroxyl value 111.8 mg KOH/g; polycarbonate diol obtained by reacting 1,6-hexanediol and dimethyl carbonate), 27.2 g of polypropylene glycol (PPG-1000; number average molecular weight 1000), 11.7 g of 2,2-dimethylolpropionic acid (DMPA) and 133.3 g of N-methylpyrrolidone (NMP). Thereafter, the materials were stirred while performing heating at 60°C, and the dissolution of DMPA was confirmed. Subsequently, 120 g of 4,4'-dicyclohexylmethane diisocyanate (hydrogenated MDI) and 0.33 g of dibutyltin dilaurylate (a catalyst) were added. The mixture was heated to 90°C, and a urethane reaction was carried out for 5 hours. Thereafter, 9.97 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 1.09 wt%. The reaction mixture was cooled to 80°C, and 8.76 g of triethylamine was admixed therewith. From the mixture, a 513 g portion was withdrawn and was added to 721 g of water while performing vigorous stirring. A chain extension reaction was carried out by adding 14.4 g of a 35 wt% aqueous hydrazine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (3). Table 2 describes the results of the dispersion stability, the rate of swelling of coating films with water, and the adhesion with the electrodeposited surface tested with respect to the aqueous polyurethane resin dispersion (3).

[Production of polyurethane film (C)]

The aqueous polyurethane resin dispersion (3) as a coating composition was applied onto a glass plate and was dried at 60°C for 2 hours and at 120°C for 2 hours, thus producing a satisfactory coating layer. The obtained coating layer was separated. A polyurethane film (C) was thus obtained. The film thickness of the polyurethane film (C) was 0.08 mm. Tensile properties are described in Table 2.

[Example 4]

[Production of aqueous polyurethane resin dispersion (4)]

A reaction vessel similar to that used in Example 1 was charged, under a stream of nitrogen, with 230 g of ETERNACOLL UH-200 (registered trademark; polycarbonate diol manufactured by UBE INDUSTRIES, LTD.; number average molecular weight 1979; hydroxyl value 56.7 mg KOH/g; polycarbonate diol obtained by reacting 1,6-hexanediol and dimethyl carbonate), 68.7 g of ETERNACOLL UH-100 (registered trademark; polycarbonate diol manufactured by UBE INDUSTRIES, LTD.; number average molecular weight 1010; hydroxyl value 111.1 mg KOH/g; polycarbonate diol obtained by reacting 1,6-hexanediol and dimethyl carbonate), 34.2 g of polypropylene glycol (PPG-1000; number average molecular weight 1000), 11.7 g of 2,2-dimethylolpropionic acid (DMPA) and 152 g of N-methylpyrrolidone (NMP). Thereafter, the materials were stirred while performing heating at 60°C, and the dissolution of DMPA was confirmed. Subsequently, 114 g of isophorone diisocyanate (IPDI) and 0.36 g of dibutyltin dilaurylate (a catalyst) were added. The mixture was heated to 90°C, and a urethane reaction was carried out for 5 hours. Thereafter, 11.3 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 1.80 wt%. The reaction mixture was cooled to 80°C, and 9.93 g of triethylamine was admixed therewith. From the mixture, a 598 g portion was withdrawn and was added to a mixed solution containing 3.12 g of triethylamine and 876 g of water while performing vigorous stirring. A chain extension reaction was carried out by adding 9.43 g of a 35 wt% aqueous hydrazine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (4). Table 2 describes the results of the dispersion stability, the rate of swelling of coating films with water, and the adhesion with the electrodeposited surface tested with respect to the aqueous polyurethane resin dispersion (4).

[Production of polyurethane film (D)]

The aqueous polyurethane resin dispersion (4) as a coating composition was applied onto a glass plate and was dried at 60°C for 2 hours and at 120°C for 2 hours, thus producing a satisfactory coating layer. The obtained coating layer was separated. A polyurethane film (D) was thus obtained. The film thickness of the polyurethane film (D) was 0.08 mm. Tensile properties are described in Table 2.

[Comparative Example 1]

[Production of aqueous polyurethane resin dispersion (5)]

A reaction vessel similar to that used in Example 1 was charged, under a stream of nitrogen, with 272 g of ETERNACOLL UH-200 (registered trademark; polycarbonate diol manufactured by UBE INDUSTRIES, LTD.; number average molecular weight 2000; hydroxyl value 56.1 mg KOH/g; polycarbonate diol obtained by reacting 1,6-hexanediol and dimethyl carbonate), 18.5 g of 2,2-dimethylolpropionic acid (DMPA) and 176 g of N-methylpyrrolidone (NMP). Subsequently, 125 g of 4,4'-dicyclohexylmethane diisocyanate (hydrogenated MDI) and 0.33 g of dibutyltin dilaurylate (a catalyst) were added. The mixture was heated to 90°C, and a urethane reaction was carried out for 5 hours. Thereafter, 10.4 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 1.78 wt%. To the reaction mixture, 13.9 g of triethylamine was admixed. From the resultant mixture, a 564 g portion was withdrawn and was added to 870 g of water while performing vigorous stirring. A chain extension reaction was carried out by adding 36.5 g of a 35 wt% aqueous 2-methyl-1,5-pentanediamine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (5). Table 2 describes the results of the dispersion stability, the rate of swelling of coating films with water, and the adhesion with the electrodeposited surface tested with respect to the aqueous polyurethane resin dispersion (5).

[Production of polyurethane film (E)]

The aqueous polyurethane resin dispersion (5) as a coating composition was applied onto a glass plate and was dried at 60°C for 2 hours and at 120°C for 2 hours, thus producing a satisfactory coating layer. The obtained coating layer was separated. A polyurethane film (E) was thus obtained. The film thickness of the polyurethane film (E) was 0.08 mm. Tensile properties are described in Table 2.

[Comparative Example 2]

[Production of aqueous polyurethane resin dispersion (6)]

A reaction vessel similar to that used in Example 1 was charged, under a stream of nitrogen, with 200 g of ETERNACOLL UH-200 (registered trademark; polycarbonate diol manufactured by UBE INDUSTRIES, LTD.; number average molecular weight 1972; hydroxyl value 56.9 mg KOH/g; polycarbonate diol obtained by reacting 1,6-hexanediol and dimethyl carbonate), 58.0 g of ETERNACOLL UH-100 (registered trademark; polycarbonate diol manufactured by UBE INDUSTRIES, LTD.; number average molecular weight 1004; hydroxyl value 111.8 mg KOH/g; polycarbonate diol obtained by reacting 1,6-hexanediol and dimethyl carbonate), 29.3 g of polypropylene glycol (PPG-1000; number average molecular weight 1000), 20.4 g of 2,2-dimethylolpropionic acid (DMPA) and 153 g of N-methylpyrrolidone (NMP). Thereafter, the materials were stirred while performing heating at 60°C, and the dissolution of DMPA was confirmed. Subsequently, 154 g of 4,4'-dicyclohexylmethane diisocyanate (hydrogenated MDI) and 0.33 g of dibutyltin dilaurylate (a catalyst) were added. The mixture was heated to 90°C, and a urethane reaction was carried out for 5 hours. Thereafter, 12.9 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 2.15 wt%. The reaction mixture was cooled to 80°C, and 15.2 g of triethylamine was admixed therewith. From the mixture, a 592 g portion was withdrawn and was added to 841 g of water while performing vigorous stirring. A chain extension reaction was carried out by adding 12.3 g of a 35 wt% aqueous hydrazine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (6). Table 2 describes the results of the dispersion stability, the rate of swelling of coating films with water, and the adhesion with the electrodeposited surface tested with respect to the aqueous polyurethane resin dispersion (6).

[Production of polyurethane film (F)]

The aqueous polyurethane resin dispersion (6) as a coating composition was applied onto a glass plate and was dried at 60°C for 2 hours and at 120°C for 2 hours, thus producing a satisfactory coating layer. The obtained coating layer was separated. A polyurethane film (F) was thus obtained. The film thickness of the polyurethane film (F) was 0.08 mm. Tensile properties are described in Table 2.

[Comparative Example 3]

[Production of aqueous polyurethane resin dispersion (7)]

A reaction vessel similar to that used in Example I was charged, under a stream of nitrogen, with 230 g of ETERNACOLL UH-200 (registered trademark; polycarbonate diol manufactured by UBE INDUSTRIES, LTD.; number average molecular weight 1979; hydroxyl value 56.7 mg KOH/g; polycarbonate diol obtained by reacting 1,6-hexanediol and dimethyl carbonate), 68.9 g of ETERNACOLL UH-100 (registered trademark; polycarbonate diol manufactured by UBE INDUSTRIES, LTD.; number average molecular weight 1010; hydroxyl value 111.1 mg KOH/g; polycarbonate diol obtained by reacting 1,6-hexanediol and dimethyl carbonate), 33.9 g of polypropylene glycol (PPG-1000; number average molecular weight 1000), 8.29 g of 2,2-dimethylolpropionic acid (DMPA) and 148 g of N-methylpyrrolidone (NMP). Thereafter, the materials were stirred while performing heating at 60°C, and the dissolution of DMPA was confirmed. Subsequently, 105 g of isophorone diisocyanate (IPDI) and 0.36 g of dibutyltin dilaurylate (a catalyst) were added. The mixture was heated to 90°C, and a urethane reaction was carried out for 5 hours. Thereafter, 10.3 g of 3,5-dimethylpyrazole (DMPZ) was injected, and stirring was continuously performed at the temperature for 1.5 hours, thereby obtaining a polyurethane prepolymer. At the completion of the urethane reaction, the content of free isocyanate groups was 1.67 wt%. The reaction mixture was cooled to 80°C, and 7.07 g of triethylamine was admixed therewith. From the mixture, a 589 g portion was withdrawn and was added to 866 g of water while performing vigorous stirring. A chain extension reaction was carried out by adding 8.31 g of a 35 wt% aqueous hydrazine solution, resulting in an aqueous polyurethane resin dispersion. Table 1 describes the content of urethane bonds, the content of urea bonds, the content of carbonate bonds, the content of ether bonds, the acid value, the weight average molecular weight, the content of alicyclic structure, and the content of blocked isocyanate groups (in terms of isocyanate groups) of the obtained aqueous polyurethane resin dispersion (7). Table 2 describes the dispersion stability of the aqueous polyurethane resin dispersion (7).

[Table 1]

| Examples | Components (a) | Components (b) | Content of urethane bonds [wt%] | Content of urea bonds [wt%] | Total content of urethane bonds and urea bonds [wt%] | Content of carbonate bonds [wt%] | Content of ether bonds [wt%] | Content of blocked NCO groups [wt%] | Acid value [mg KOH/g] | Weight average molecular weight Mw | Content of alicyclic structure [wt%] |
|---|---|---|---|---|---|---|---|---|---|---|---|
| Example 1 | $H_{12}$-MDI | UH-200/UH-100/PPG1000 (7/2/1) | 8.4 | 3.6 | 12.0 | 22.3 | 1.7 | 1.2 | 16 | 36,000 | 19.3 |
| Example 2 | $H_{12}$-MDI | UH-200/UH-100/PPG1000 (7/2/1) | 8.1 | 3.4 | 11.5 | 22.9 | 1.8 | 1.1 | 14 | 37,000 | 18.6 |
| Example 3 | $H_{12}$-MDI | UH-200/UH-100/PPG1000 (7/2/1) | 7.8 | 3.3 | 11.1 | 23.5 | 1.8 | 1.1 | 12 | 35,000 | 17.9 |
| Example 4 | IPDI | UH-200/UH-100/PPG1000 (7/2/1) | 7.8 | 3.3 | 11.1 | 25.1 | 2.0 | 1.1 | 10 | 34,000 | 15.1 |
| Comparative Example 1 | $H_{12}$-MDI | UH-200 | 7.6 | 3.2 | 10.8 | 25.1 | 0.0 | 1.0 | 18 | 36,000 | 18.3 |
| Comparative Example 2 | $H_{12}$-MDI | UH-200/UH-100/PPG1000 (7/2/1) | 8.8 | 3.7 | 12.5 | 21.7 | 1.7 | 1.2 | 18 | 35,000 | 20.1 |
| Comparative Example 3 | IPDI | UH-200/UH-100/PPG1000 (7/2/1) | 7.4 | 3.1 | 10.5 | 25.8 | 2.1 | 1.0 | 8 | 35,000 | 14.4 |

16

[Table 2]

| Ex. | Disp. stab. | With respect to water | | With respect to aqueous cleaning liquid | | Tensile properties | | | | Adhesion with electrodeposited surface |
|---|---|---|---|---|---|---|---|---|---|---|
| | | Rate of swell [%] | Rate of dissolution [%] | Rate of swell [%] | Rate of dissolution [%] | Elas. mod. [MPa] | Tnsl. str. [MPa] | Break elong. [%] | Brkg. energy [MPa] | |
| Ex. 1 | ○ | 20 | 0 | 125 | 0 | 83 | 47 | 500 | 130 | 25/25 |
| Ex. 2 | ○ | 16 | 0 | 135 | 0 | 60 | 50 | 500 | 120 | 25/25 |
| Ex. 3 | ○ | 9 | 0 | 102 | 0 | 32 | 43 | 540 | 110 | 25/25 |
| Ex. 4 | ○ | 19 | 0 | * | * | 5 | 20 | 500 | 30 | 25/25 |
| Comp. Ex. 1 | ○ | 14 | 0 | 56 | 0 | 45 | 51 | 450 | 130 | 25/25 |
| Comp. Ex. 2 | ○ | 29 | 0 | 163 | 0 | 100 | 45 | 500 | 130 | 25/25 |
| Comp. Ex. 3 | × | - | - | - | - | - | - | - | - | - |

The aqueous polyurethane resin dispersions of Examples were demonstrated to give coating films which exhibited low rates of swelling and dissolution with respect to water, namely, excellent water resistance and which on the other hand exhibited a high rate of swelling with respect to the aqueous cleaning liquid, thus permitting new application. On the other hand, the coating films of Comparative Example 1 exhibited excellent water resistance but hardly permitted new application due to the low rate of swelling with respect to the aqueous cleaning liquid. In Comparative Example 2, the coating films were inferior in water resistance. The aqueous polyurethane resin dispersion of Comparative Example 3 lacked dispersion stability and the use of the dispersion itself was difficult.

Industrial Applicability

The aqueous polyurethane resin dispersions according to the invention may be widely utilized as, for example, materials for coatings and coating agents.

**Claims**

1. An aqueous polyurethane resin dispersion in which a polyurethane resin is dispersed in an aqueous medium, the polyurethane resin being obtained by reacting (A) a polyurethane prepolymer obtained by reacting (a) a polyisocyanate compound, (b) a polyol compound including a polycarbonate polyol with a number average molecular weight of 400 to 3000, (c) an acidic group-containing polyol compound and (d) an isocyanate group-blocking agent, with (B) a chain extender having reactivity with the isocyanate groups of the polyurethane prepolymer, the total of the content of urethane bonds and the content of urea bonds being 7 to 15 wt%, the content of carbonate bonds being 15 to 40 wt%, the content of ether bonds being 0.5 to 5 wt%, the content of isocyanate groups bonded to the blocking agent being 0.2 to 2.0 wt% in terms of isocyanate groups, each of these contents being based on solid contents, the acid value being 10 to 16 mg KOH/g.

2. The aqueous polyurethane resin dispersion according to claim 1, wherein (b) the polyol compound includes a polyether polyol.

3. The aqueous polyurethane resin dispersion according to claim 2, wherein the proportion of the polyether polyol is 5 to 30 wt% in 100 wt% of (b) the polyol compound.

4. The aqueous polyurethane resin dispersion according to any one of claims 1 to 3, wherein the weight average molecular weight is 25,000 to 60,000.

5. The aqueous polyurethane resin dispersion according to any one of claims 1 to 4, wherein the polyurethane resin includes an alicyclic structure and the content of the alicyclic structure is 10 to 40 wt% based on solid content.

6. The aqueous polyurethane resin dispersion according to any one of claims 1 to 5, wherein (a) the polyisocyanate compound is an alicyclic diisocyanate.

7. The aqueous polyurethane resin dispersion according to any one of claims 1 to 6, wherein (a) the polyisocyanate compound is 4,4'-dicyclohexylmethane diisocyanate and/or isophorone diisocyanate.

8. The aqueous polyurethane resin dispersion according to any one of claims 1 to 7, wherein (d) the blocking agent is one or more selected from the group consisting of an oxime compound, a pyrazole compound and a malonate diester compound.

9. A coating composition comprising the aqueous polyurethane resin dispersion described in any one of claims 1 to 8.

10. A polyurethane resin film obtained by thermally drying a composition comprising the aqueous polyurethane resin dispersion described in any one of claims 1 to 8.

## INTERNATIONAL SEARCH REPORT

| International application No. |
|---|
| PCT/JP2012/052941 |

A. CLASSIFICATION OF SUBJECT MATTER
*C08G18/65*(2006.01)i, *C08G18/80*(2006.01)i, *C09D5/02*(2006.01)i, *C09D175/04*
(2006.01)i

According to International Patent Classification (IPC) or to both national classification and IPC

B. FIELDS SEARCHED

Minimum documentation searched (classification system followed by classification symbols)
C08G18/00-18/87, C09D5/02, C09D175/00-175/16

Documentation searched other than minimum documentation to the extent that such documents are included in the fields searched
Jitsuyo Shinan Koho          1922-1996     Jitsuyo Shinan Toroku Koho     1996-2012
Kokai Jitsuyo Shinan Koho    1971-2012     Toroku Jitsuyo Shinan Koho     1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2010/098316 A1 (Ube Industries, Ltd.), 02 September 2010 (02.09.2010), claims 1 to 10; paragraphs [0014], [0029], [0042] to [0051]; table 1 (Family: none) | 1-10 |
| A | WO 2011/010719 A1 (Ube Industries, Ltd.), 27 January 2011 (27.01.2011), claims 1 to 13; paragraph [0058] (Family: none) | 1-10 |
| A | WO 2009/145242 A1 (Ube Industries, Ltd.), 03 December 2009 (03.12.2009), claims 1 to 14; paragraph [0034] & US 2011/0077352 A1 & EP 2281848 A1 & CN 102046686 A | 1-10 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 April, 2012 (10.04.12) | 24 April, 2012 (24.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/052941 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2007-92195 A  (Dai-Ichi Kogyo Seiyaku Co., Ltd.), 12 April 2007 (12.04.2007), claims 1, 3; paragraph [0007] (Family: none) | 1-10 |
| A | WO 2010/098317 A1  (Ube Industries, Ltd.), 02 September 2010 (02.09.2010), claims 1 to 10 (Family: none) | 1-10 |
| A | WO 2010/098318 A1  (Ube Industries, Ltd.), 02 September 2010 (02.09.2010), claims 1 to 10 (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10120757 B
- JP 2002128851 A
- JP 2000104015 A
- JP 2005220255 A
- WO 2010098316 A

**Non-patent literature cited in the description**

- The Comprehensive Materials and Technology for a Novel Polyurethane Production. CMC Publishing CO., LTD, 43